(19) Europäisches Patentamt / European Patent Office / Office européen des brevets

(11) **EP 1 922 736 B1**

(12) **FASCICULE DE BREVET EUROPEEN**

(45) Date de publication et mention
de la délivrance du brevet:
**21.05.2014 Bulletin 2014/21**

(21) Numéro de dépôt: **06808054.8**

(22) Date de dépôt: **21.08.2006**

(51) Int Cl.:
***G21C 17/06*** *(2006.01)* ***G21D 3/00*** *(2006.01)*

(86) Numéro de dépôt international:
**PCT/FR2006/001965**

(87) Numéro de publication internationale:
**WO 2007/028870 (15.03.2007 Gazette 2007/11)**

(54) **PROCEDE DE DETERMINATION D'AU MOINS UN FACTEUR D'INCERTITUDE TECHNOLOGIQUE D'ELEMENTS DE COMBUSTIBLE NUCLEAIRE, PROCEDE DE CONCEPTION, PROCEDE DE FABRICATION ET PROCEDE DE CONTROLE D'ELEMENTS DE COMBUSTIBLE NUCLEAIRE CORRESPONDANTS**

VERFAHREN ZUR BESTIMMUNG MINDESTENS EINES TECHNOLOGISCHEN UNBESTIMMTHEITSFAKTORS IN BEZUG AUF KERNBRENNSTOFFELEMENTE UND VERFAHREN ZUM ENTWURF, VERFAHREN ZUR HERSTELLUNG UND VERFAHREN ZUR PRÜFUNG DER ENTSPRECHENDEN KERNBRENNSTOFFELEMENTE

METHOD OF DETERMINING AT LEAST ONE TECHNOLOGICAL UNCERTAINTY FACTOR IN RESPECT OF NUCLEAR FUEL ELEMENTS AND METHOD OF DESIGNING, METHOD OF PRODUCING AND METHOD OF CHECKING THE CORRESPONDING NUCLEAR FUEL ELEMENTS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.09.2005 FR 0509228**

(43) Date de publication de la demande:
**21.05.2008 Bulletin 2008/21**

(73) Titulaire: **AREVA NP**
**92400 Courbevoie (FR)**

(72) Inventeurs:
• **CHARMENSAT, Pascal**
**F-69300 Caluire (FR)**
• **PASQUET, Michel**
**F-38280 Villette D'anthon (FR)**

(74) Mandataire: **Domenego, Bertrand**
**Cabinet Lavoix**
**2, place d'Estienne d'Orves**
**75441 Paris Cedex 09 (FR)**

(56) Documents cités:
• **COORS D ET AL: "Auswirkungen von Brennstofftoleranzen auf die Betriebsdaten eines schnellen Reaktors" JOURNAL OF NUCLEAR MATERIALS NETHERLANDS, vol. 106, no. 1-3, avril 1982 (1982-04), pages 253-259, XP002383087 ISSN: 0022-3115**
• **WILLERMOZ G ET AL: "Modelling of manufacturing fuel heterogeneities in a PWR via a stochastic-perturbative method" PROGRESS IN NUCLEAR ENERGY ELSEVIER UK, vol. 33, no. 3, 1998, pages 265-278, XP002383086 ISSN: 0149-1970**
• **WILLERMOZ G ET AL: "Sensitivity analysis of core parameters to fuel manufacturing uncertainties" REACTOR PHYSICS AND REACTOR COMPUTATIONS. PROCEEDINGS OF THE INTERNATIONAL CONFERENCE ON REACTOR PHYSICS AND REACTOR COMPUTATIONS BEN-GURION UNIV. OF THE NEGEV PRESS BEER-SHEVA, ISRAEL, 1994, pages 30-39, XP002383088**

**Description**

La présente invention concerne un procédé de détermination de facteurs d'incertitude technologique.

L'invention s'applique par exemple, mais pas exclusivement, au combustible nucléaire utilisé dans les réacteurs à eau légère, tels que les réacteurs à eau pressurisée.

Le combustible nucléaire utilisé dans ces réacteurs est conditionné sous forme de pastilles.

Ces pastilles sont disposées dans des gaines pour former des crayons de combustible nucléaire qui sont regroupés au sein d'assemblages. Ces assemblages sont destinés à être chargés dans les coeurs des réacteurs nucléaires.

Pour fabriquer des pastilles de combustible nucléaire, on fixe pour les paramètres de fabrication des valeurs nominales et des tolérances individuelles. Dans les pastilles fabriquées, les valeurs réelles de ces paramètres de fabrication varient nécessairement d'une pastille à l'autre par rapport à la valeur nominale et doivent, pour chaque pastille, respecter les tolérances de fabrication choisies.

La conception des pastilles de combustible est soumise aux règles impératives de sûreté qui caractérisent toute l'industrie nucléaire.

Dans ce cadre, il s'agit d'utiliser efficacement la matière fissile tout en imposant au fabricant un cahier des charges pertinent et en proposant à l'exploitant des conditions de fonctionnement souples.

La réponse à ces objectifs nécessite une connaissance fine du comportement du combustible nucléaire et le contrôle des variations qui apparaissent nécessairement en fabrication par rapport aux valeurs nominales des paramètres de fabrication.

Le nombre trop important des paramètres caractérisant les pastilles de combustible nucléaire ne permettent pas de les prendre en compte directement dans les études de sûreté.

Les calculs neutroniques, mis en oeuvre pour ces études de sûreté, sont donc effectués avec les valeurs nominales et les variations par rapport à ces valeurs sont prises en compte par des coefficients multiplicatifs, appelés facteurs d'incertitude technologique, et qui sont appliqués aux résultats des calculs neutroniques.

On utilise notamment le facteur d'incertitude technologique pour la puissance linéique au point chaud $F_Q^E$ dont la définition sera rappelée plus loin.

Pour un réacteur nucléaire donné, la sûreté du coeur exige qu'à tout instant la puissance linéique du crayon le plus chaud (pic de puissance) soit inférieure à la limite fixée par le rapport de sûreté du réacteur. Il convient donc de s'assurer que la puissance linéique du crayon le plus chaud, calculée avec les paramètres de fabrication à leurs valeurs nominales, et augmentée du facteur $F_Q^E$ reste inférieure à cette limite.

Auparavant, le calcul du facteur $F_Q^E$ était effectué, paramètre de fabrication par paramètre de fabrication, en considérant la valeur permise maximisant la puissance linéique, alors que des phénomènes de compensation existaient. De plus, l'incertitude du calcul était telle qu'il n'était pas possible de comparer les différentes variations.

L'article de MM. COORS, WEBER, SPENKE et ADAM « Auswirkungen von Brennstofftoleranzen auf die Betriebsdaten eines Schnellen Reaktors » JOURNAL OF NUCLEAR MATERIALS NETHERLANDS, vol. 106, no. 1-3, avril 1982 (1982-04), pages 253-259, XP002383087 ISSN:0022-31115 décrit un tel procédé de détermination d'un facteur d'incertitude technologique utilisant des variations individuelles de paramètres de fabrication de pastilles de combustible nucléaire.

Pour mieux évaluer les incertitudes, et ainsi permettre de donner de la flexibilité au fabricant du combustible nucléaire ou à l'exploitant du réacteur, ou encore de relaxer des contraintes pour augmenter les performances du combustible nucléaire, on a proposé de prendre en compte le caractère aléatoire des variations en fabrication en s'appuyant sur la Théorie des Perturbations Classique et Généralisée (TPCG).

Ce procédé de détermination du facteur $F_Q^E$ est décrit par exemple dans le mémoire de la thèse de doctorat présentée devant l'Université Claude Bernard - Lyon I pair Guy WILLERMOZ, soutenue le 28 septembre 1994 devant la commission d'examen, et s'intitulant « Etude stochastique de l'impact neutronique des hétérogénéités en fabrication du combustible nucléaire ».

Ce procédé permet de quantifier l'influence de chaque paramètre de fabrication sur l'état du coeur d'un réacteur nucléaire. Il a été mis au point par l'analyse des variations des paramètres de fabrication dans un combustible à base de mélange d'oxydes mixtes (MOX).

Pour cela, une loi de probabilité est associée aux différentes variations des paramètres de fabrication des pastilles. Ayant, par des études statistiques, estimé la loi conjointe des paramètres de fabrication, son influence sur la loi des puissances ponctuelles a été étudiée, au travers de l'équation de Boltzmann.

Le développement de Taylor stochastique a été utilisé, le calcul des coefficients de sensibilité dans un cadre multi-paramétrique a été assuré grâce à la Théorie des Perturbations Classique et Généralisée (TPCG).

Ainsi, dans ce procédé de l'état de la technique, on tient en compte des variations individuelles, c'est-à-dire pastille à pastille, des paramètres de fabrication, en les multipliant par des coefficients de sensibilité que l'on qualifiera de microscopiques puisqu'ils ne s'intéressent qu'aux variations individuelles. Les variations individuelles prises en compte peuvent être les tolérances que les pastilles doivent respecter individuellement.

Ce procédé de détermination du facteur d'incertitude technologique $F_Q^E$ s'avère satisfaisant.

Toutefois, il serait souhaitable d'améliorer encore la détermination des facteurs d'incertitude technologique tels que $F_Q^E$ et ainsi permettre d'accroître la flexibilité du fabricant de combustible nucléaire ou de l'exploitant du réacteur nucléaire.

A cet effet, l'invention a pour objet un procédé de détermination d'au moins un facteur d'incertitude technologique d'éléments de combustible nucléaire selon la revendication 1.

Selon des modes particuliers de réalisation, le procédé peut comprendre l'une ou plusieurs des caractéristiques des revendications 2 à 8.

L'invention a en outre pour objet un procédé de conception d'un élément de combustible nucléaire selon la revendication 9 ou selon la revendication 10.

L'invention a en outre pour objet un procédé de fabrication d'éléments de combustible nucléaire selon la revendication 11.

L'invention a de plus pour objet un procédé de contrôle d'éléments de combustible nucléaire fabriqués selon la revendication 12.

L'invention a en outre pour objet un procédé de conception d'un élément de combustible nucléaire, le procédé comprenant une étape d'utilisation d'un procédé de détermination tel que défini ci-dessus.

Selon une variante, l'élément de combustible nucléaire devant respecter une valeur limite pour au moins un facteur d'incertitude technologique, le procédé comprend des étapes de :

- définition d'une tolérance collective de fabrication au moins pour ledit paramètre de fabrication, l'écart entre la moyenne des valeurs réelles dudit paramètre dans un lot d'éléments fabriqués et la valeur nominale dudit paramètre devant respecter la tolérance collective,
- éventuellement définition d'une tolérance individuelle de fabrication au moins pour ledit paramètre de fabrication, l'écart individuel entre la valeur réelle du paramètre de fabrication pour un élément individuel et la valeur nominale dudit paramètre pour un élément fabriqué et la valeur nominale dudit paramètre devant respecter la tolérance individuelle, et
- détermination de la valeur dudit facteur d'incertitude technologique à partir d'un procédé tel que défini ci-dessus, en utilisant en tant que variation collective la tolérance collective de fabrication définie et éventuellement en tant que variation individuelle la tolérance individuelle définie, et
- comparaison de la valeur déterminée du facteur d'incertitude technologique avec la valeur limite pour valider les tolérances de fabrication définies.

L'invention a en outre pour objet un procédé de fabrication d'éléments de combustible nucléaire conçus par un procédé tel que défini ci-dessus.

L'invention a de plus pour objet un procédé de contrôle d'éléments de combustible nucléaire fabriqués, le procédé comprenant les étapes de :

- utilisation d'un procédé tel que défini ci-dessus pour déterminer la valeur d'au moins un facteur d'incertitude technologique pour les éléments de combustible nucléaire fabriqués, en utilisant en tant que variation collective l'écart entre une moyenne des valeurs réelles dudit paramètre mesurées dans un lot des éléments fabriqués et la valeur nominale dudit paramètre, et éventuellement en tant que variation individuelle l'écart entre une valeur réelle effectivement mesurée sur un élément fabriqué et la valeur nominale dudit paramètre,
- comparaison avec une valeur limite de facteur d'incertitude technologique que les éléments de combustible nucléaire doivent respecter afin de rendre un verdict sur les éléments de combustible nucléaire fabriqués.

L'invention sera mieux comprise à la lecture de la description qui va suivre, donnée uniquement à titre d'exemple, et faite en se référant aux dessins annexés, sur lesquels :

- la figure 1 est une vue schématique latérale d'un assemblage de combustible nucléaire pour réacteur à eau pressurisée,

- la figure 2 est une vue schématique en coupe longitudinale d'un crayon de l'assemblage de la figure 1,
- la figure 3 est une vue schématique, partielle et agrandie, illustrant la forme d'une pastille du crayon de la figure 2,
- la figure 4 est une vue schématique de dessus illustrant le motif utilisé pour le calcul des coefficients de sensibilité microscopiques pour la mise en oeuvre d'un procédé de détermination selon l'invention.

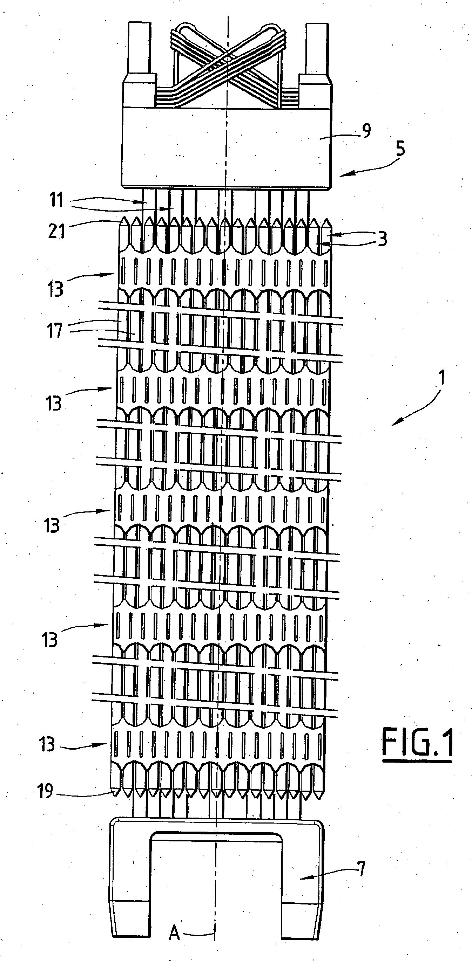

La figure 1 représente schématiquement un assemblage 1 de combustible nucléaire pour réacteur à eau pressurisée. L'eau y assure donc une fonction de réfrigération et de modération, c'est-à-dire de ralentissement des neutrons produits par le combustible nucléaire.

L'assemblage 1 s'étend verticalement et de manière rectiligne le long d'une direction longitudinale A.

De manière classique, l'assemblage 1 comprend principalement des crayons 3 de combustible nucléaire et une structure ou squelette 5 de support des crayons 3.

Le squelette de support 5 comprend :

- un embout inférieur 7 et un embout supérieur 9 disposés aux extrémités longitudinales de l'assemblage 1,
- des tubes-guides 11 destinés à recevoir les crayons d'une grappe non-représentée de commande et d'arrêt du réacteur nucléaire, et
- des grilles 13 de maintien des crayons 3.

Les embouts 7 et 9 sont reliés aux extrémités longitudinales des tubes guides 11.

Les crayons 3 s'étendent verticalement entre les embouts 7 et 9. Les crayons 3 sont disposés aux noeuds d'un réseau sensiblement régulier à base carrée où ils sont maintenus par les grilles 13. Certains des noeuds du réseau sont occupés par les tubes-guides 11 et éventuellement par un tube d'instrumentation.

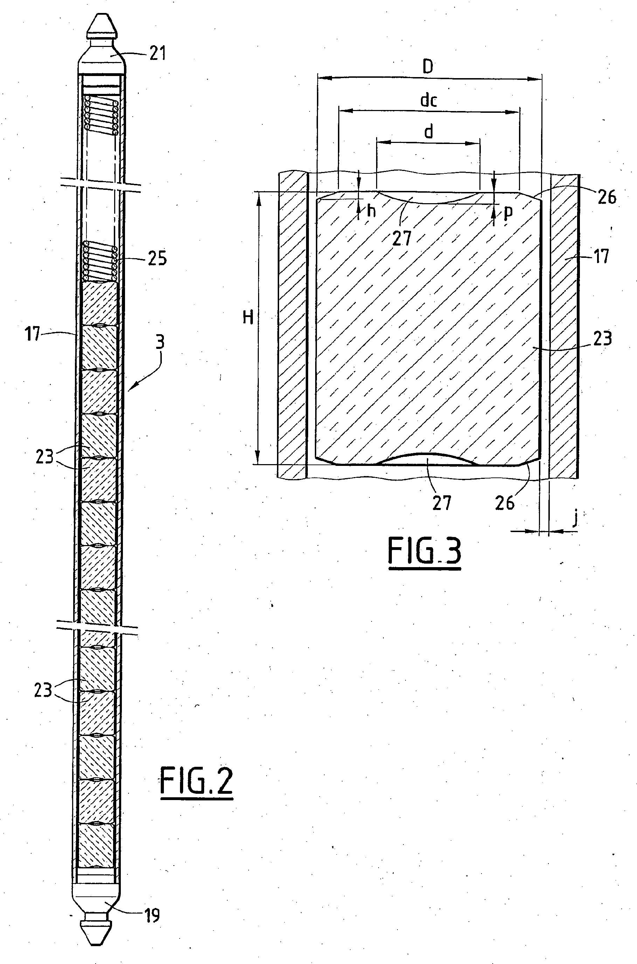

Comme illustré par la figure 2, chaque crayon 3 comprend une gaine extérieure 17 fermée par un bouchon inférieur 19 et un bouchon supérieur 21, et contenant le combustible nucléaire.

Il s'agit ici de pastilles de combustible 23 empilées, les pastilles 23 prenant appui sur le bouchon inférieur 19.

Un ressort hélicoïdal de maintien 25 est disposé dans la gaine 17, entre la pastille 23 supérieure et le bouchon supérieur 21.

Comme illustré par la figure 3, chaque pastille 23 a une forme sensiblement cylindrique de diamètre **D** et de hauteur **H.** La pastille 23 présente des chanfreins 26 entre ses faces d'extrémité et sa face latérale. Ces chanfreins ont une hauteur **h** et un diamètre intérieur **dc**. Un évidement 27 en calotte sphérique est ménagé dans chaque face d'extrémité, sensiblement au centre de celle-ci. Il a un diamètre **d** et une profondeur **p.**

Le rapport hauteur/diamètre H/D peut être quelconque, par exemple d'environ 1,6, mais également plus faible par exemple d'environ 0,5.

Un jeu diamétral **j,** compris par exemple entre 100 et 300 $\mu$m, est prévu entre les pastilles 23 et la gaine 17.

Le combustible des pastilles 23 est par exemple de l'oxyde d'uranium ($UO_2$ naturel) enrichi en isotope 235. En variante, le combustible peut également être à base d'uranium retraité enrichi, d'oxyde mixte uranium-plutonium et/ou contenir des poisons neutroniques à base de terre rare (gadolinium, erbium).

A l'issue de sa fabrication, une pastille 23 est définie par une série de caractéristiques qui sont communes à tous les types de pastille, à savoir à base d'uranium naturel enrichi (URE), d'uranium retraité enrichi (URE), de mélange d'oxydes mixtes (MOX), ou contenant des poisons neutroniques tels que de l'oxyde de gadolinium.

Ces caractéristiques comprennent :

- les dimensions de la pastille, à savoir la hauteur **H** et le diamètre **D** de la pastille 23, la profondeur **p** et le diamètre **d** des évidements 27, la hauteur **h** et le diamètre **dc** des chanfreins 26, et
- la densité géométrique **Dg.**

La densité géométrique **Dg** de la pastille est définie comme le rapport de sa masse d'oxyde sous forme céramique à sa masse d'oxyde théorique.

Une variation de l'une de ces caractéristiques se traduit par une variation de volume, donc de la quantité de matière fissile contenue dans la pastille 23.

## Définition des paramètres de fabrication pris en compte

Dans l'exemple de réalisation de l'invention décrit par la suite, les variations en fabrication de ces caractéristiques sont prises en compte dans les calculs neutroniques par les paramètres de fabrications suivants :

- la fraction volumique **Fv,** qui est le rapport entre le volume de la pastille 23 et celui du volume du cylindre l'enveloppant, cette fraction tient donc compte des dimensions des évidements 27 et des chanfreins 26,
- le diamètre **D,** et
- la densité géométrique **Dg.**

Ces paramètres de fabrication s'appliquent aux pastilles quel que soit le type du combustible nucléaire, et seront donc qualifiés de génériques par la suite.
D'autres paramètres de fabrication peuvent également être pris en compte spécifiquement pour les différents types de pastilles.
Pour les pastilles UNE, on peut utiliser la teneur en isotope $^{235}$U, rappelée aussi enrichissement e, qui est définie par :

$$e = \frac{\text{masse} \left(^{235}\text{U}\right)}{\text{masse} \left(^{235}\text{U} + {}^{238}\text{U}\right)}$$

Pour les pastilles UNE gadoliniées, on peut utiliser l'enrichissement es de l'uranium support :

$$es = \frac{\text{masse} \left(^{235}\text{U}\right)}{\text{masse} \left(^{235}\text{U} + {}^{238}\text{U}\right)}$$

Pour ces pastilles, on peut utiliser également la teneur en oxyde de gadolinium t qui est définie par le rapport de $Gd_2O_3$ à la masse totale d'$UO_2$ et de $Gd_2O_3$ :

$$t = \frac{\text{masse} \left(Gd_2O_3\right)}{\text{masse} \left(UO_2 + Gd_2O_3\right)}$$

où Gd = ($^{154}$Gd, $^{155}$Gd, $^{156}$Gd, $^{157}$Gd, $^{158}$Gd, $^{160}$Gd) et U = ($^{235}$U, $^{238}$U) de l'uranium support.
Pour caractériser le gadolinium dans ces pastilles ont peut également prendre en compte la composition isotopique **CI** qui à un instant donné est définie par:

$$CI = \frac{\text{masse (isotope i)}}{\sum_i \text{masse (isotope i)}}$$

Dans cette formule, on prend en compte les isotopes suivants : $^{154}$Gd, $^{155}$Gd, $^{156}$Gd, $^{157}$Gd, $^{158}$Gd, $^{160}$Gd.
Toutefois, la composition isotopique est généralement celle du gadolinium naturel. La fabrication du combustible n'induit donc pas de variabilité de cette composition **CI** et la composition isotopique du gadolinium ne sera donc pas considérée par la suite dans l'exemple décrit.
Pour ce qui concerne les pastilles URE, on peut prendre en compte les isotopes suivants de l'uranium : $^{234}$U, $^{235}$U, $^{236}$U et $^{238}$U.
Les isotopes $^{234}$U, $^{235}$U et $^{236}$U sont caractérisés par leurs teneurs propres, appelées aussi enrichissement. Ces paramètres de fabrication étant définis par:

$$e_4 = \frac{\text{masse} \left(^{234}\text{U}\right)}{\text{masse} \left(^{234}\text{U} + {}^{235}\text{U} + {}^{236}\text{U} + {}^{238}\text{U}\right)}$$

$$e_5 = \frac{\text{masse } (^{235}\text{U})}{\text{masse } (^{234}\text{U} + \,^{235}\text{U} + \,^{236}\text{U} + \,^{238}\text{U})}$$

$$e_6 = \frac{\text{masse } (^{236}\text{U})}{\text{masse } (^{234}\text{U} + \,^{235}\text{U} + \,^{236}\text{U} + \,^{238}\text{U})}$$

Pour les pastilles MOX, on peut prendre en compte les paramètres de fabrication spécifiques suivants :

- enrichissement de l'uranium support **es :**

 2 isotopes peuvent être pris en compte pour caractériser l'uranium support :

 $^{235}$U et $^{238}$U.

L'enrichissement es est alors défini par :

$$es = \frac{\text{masse } (^{235}\text{U})}{\text{masse } (^{235}\text{U} + \,^{238}\text{U})}$$

- Composition isotopique du plutonium **CI :**

 6 isotopes peuvent être pris en compte pour caractériser le plutonium : $^{238}$Pu, $^{239}$Pu, $^{240}$Pu, $^{241}$Pu, $^{242}$Pu et $^{241}$Am qui est obtenu par désintégration $\beta^-$ du $^{241}$Pu avec une période de 14,4 ans.

La composition isotopique **CI** à un instant donné est alors définie par:

$$Ci_j = \frac{\text{masse (isotope Pu}_j)}{\sum_j \text{masse (isotope Pu}_j)}$$

- teneur en plutonium t (ou teneur en plutonium total) qui est définie par :

$$t = \frac{\text{masse (Pu} + \,^{241}\text{Am})}{\text{masse (U} + \text{Pu} + \,^{241}\text{Am})}$$

où Pu = ($^{238}$Pu, $^{239}$Pu, $^{240}$Pu, $^{241}$Pu, $^{242}$Pu) et U = ($^{235}$U, $^{238}$U).
- teneur en plutonium fissile $t_{fis}$ :

$$t_{fis} = \frac{\text{masse } (^{239}\text{Pu} + \,^{241}\text{Pu})}{\text{masse (U} + \text{Pu} + \,^{241}\text{Am})}$$

où Pu = ($^{238}$Pu, $^{239}$Pu, $^{240}$Pu, $^{241}$Pu, $^{242}$Pu) et U = ($^{235}$U, $^{238}$U).

Dans l'exemple de mise en oeuvre de l'invention décrit, les paramètres de fabrication génériques et spécifiques définis ci-dessus sont ceux pris en compte pour vérifier qu'un combustible nucléaire donné satisfait aux exigences de sûreté. Ces paramètres de fabrication seront par la suite désignés généralement $F_i$.

Le combustible nucléaire est modélisé en utilisant les valeurs nominales $F_{io}$ des paramètres de fabrication $F_i$.

Comme indiqué précédemment, les variations par rapport à ces valeurs nominales, inévitables lors de la fabrication, sont alors prises en compte au travers de coefficients d'incertitudes pénalisant les résultats de calcul : les facteurs d'incertitude technologique.

## Définition des facteurs d'incertitude technologique

Ces facteurs s'appliquent aux calculs du facteur de point chaud $F_Q$ et du facteur d'élévation d'enthalpie $F_{\Delta H}$ dans les études de sûreté.

On rappelle que le point chaud est le crayon d'un coeur ayant la puissance la plus élevée. Dans la suite, il sera parfois dénommé crayon chaud ou localisé comme étant le pic de puissance.

Ils sont généralement en France au nombre de deux :

Le premier est le facteur d'incertitude technologique pour la puissance linéique au point chaud $F_Q{}^E$.

Il est défini par :

$$F_Q^E = \left( \frac{P_{max}}{P_{nom}} \right)_{point\ chaud}$$

avec $P_{max}$ : valeur maximale de la puissance linéique au point chaud en tenant compte des variations liées à la fabrication,

et $P_{nom}$ : puissance linéique calculée au point chaud avec les valeurs nominales de fabrication $F_{io}$.

Comme indiqué précédemment, la puissance linéique va dépendre des variations pastille à pastille des paramètres de fabrication $F_i$ suivants :

- fraction volumique **Fv**,
- diamètre **D,**
- densité géométrique **Dg,**
- enrichissement **e** dans le cas de pastilles UNE et enrichissements $e_4$, $e_5$ et $e_6$ dans le cas de pastilles URE,
- composition isotopique du plutonium **CI**, enrichissement en $^{235}$U de l'uranium support **es,** teneur en plutonium **t** pour les pastilles MOX,
- enrichissement de l'uranium support **es** et teneur en gadolinium **t** en présence de crayons gadoliniés.

Le deuxième facteur est le facteur d'incertitude technologique de canal chaud $F_{\Delta H}{}^{E1}$.

Il est défini par :

$$F_{\Delta H}^{E1} = \left( \frac{\Delta H_{max}}{\Delta H_{nom}} \right)_{canal\ chaud}$$

avec $\Delta H_{max}$ : valeur maximale de l'élévation d'enthalpie dans le canal chaud due aux variations de fabrication.

et $\Delta H_{nom}$ : élévation d'enthalpie dans le canal chaud calculée avec les valeurs nominales de fabrication $F_{io}$.

On rappelle que le canal chaud est le canal, c'est-à-dire l'intervalle situé entre des crayons de combustible adjacents, où la variation d'enthalpie est la plus élevée. Il est généralement situé à côté du crayon chaud.

L'élévation d'enthalpie va dépendre des variations crayon à crayon des paramètres suivants :

- fraction volumique **Fv,**
- diamètre **D,**
- densité géométrique **Dg,**
- enrichissement e dans le cas de pastilles UNE et enrichissement $e_4$, $e_5$ et $e_6$ dans le cas de pastilles URE,
- composition isotopique du plutonium **CI**, enrichissement en $^{235}$U de l'uranium **es,** teneur en plutonium **t** pour le MOX,
- enrichissement de l'uranium support **es** et teneur gadolinium **t** en présence de crayons gadoliniés.

## Détermination des facteurs d'incertitude technologique

On va exposer maintenant le procédé de détermination des facteurs d'incertitude technologique.

On a:

$$F_Q^E = \frac{P_{max}}{P_0} = \frac{P_0 + \delta P_{max}}{P_0} = 1 + \frac{\delta P_{max}}{P_0}$$

Si on fait l'hypothèse que la variable P est distribuée selon une loi normale, alors la variable $\delta P/P_0$ est également distribuée selon une loi normale qui est caractérisée par une moyenne nulle et un écart type $\sigma$.

95 % des valeurs $\delta P/P_0$ sont inférieures à $1.645\sigma$ avec un indice de confiance de 95%, en considérant une dispersion unilatérale.

On a donc $F_Q^E = 1 + 1.645\sigma$, ce que l'on peut également écrire :

$$F_Q^E = 1 + 1.645 \sqrt{variance\left(\frac{\delta P_{max}}{P_0}\right)}$$

Les facteurs d'incertitude technologique de la grandeur pertinente sont déterminés à partir de formules de sensibilité de la grandeur pertinente (puissance linéique maximale ou élévation d'enthalpie maximale) aux paramètres de fabrication $F_i$ du combustible nucléaire considéré.

Pour des variations des différents paramètres de fabrication $F_i$ faibles autour des valeurs nominales $F_{io}$, il est possible d'exprimer l'impact de la variations des paramètres de fabrication sur la grandeur pertinente à l'aide de formules de sensibilité du type :

$$\frac{\delta P}{P_o} = \sum_i \lambda_i \frac{\delta F_i}{F_{io}}$$

où $\delta P/P_o$ est la variation relative de la grandeur au point chaud, $\delta F_i/F_{io}$ désigne les variations relatives de chaque paramètre de fabrication $F_i$ et $\lambda_i$ désigne les coefficients de sensibilité en puissance.

On suppose que les variations des différents paramètres de fabrication $F_i$ sont indépendantes les unes des autres, et distribuées suivant des lois normales de moyenne $\mu_i$ et d'écart type $\sigma_i$. La variance de $\delta F_i/F_{i0}$ est alors égale à la variance de $F_i$ divisée par le carré de la moyenne de $F_i$ : $(\sigma_i/\mu_i)^2$.

La variabilité de l'écart de la grandeur pertinente au point chaud est alors distribuée suivant une loi normale caractérisée par une variance telle que :

$$var\left(\frac{\delta P}{P_o}\right) = \sum_i \lambda_i^2 \frac{\sigma_i^2}{\mu_i^2}$$

En considérant pour P, la puissance linéique au point chaud, la valeur du premier facteur d'incertitude technologique $F_Q^E$ est telle que 95% des variations locales de puissance linéique sont inférieures à :

$$F_Q^E = 1 + 1.645 \sqrt{var\left(\frac{\delta P_{lin}}{P_{lin}}\right)}$$

En considérant pour P, l'élévation d'enthalpie dans le canal chaud, la valeur $F_{\Delta H}^{E1}$ est telle que 95% des variations d'élévation d'enthalpie sont inférieures à :

$$F_{\Delta H}^{E1} = 1 + 1.645 \sqrt{\text{var}\left(\frac{\delta \Delta H}{\Delta H}\right)}$$

Deux types de formules de sensibilité sont calculées selon que l'on considère que l'écart du paramètre de fabrication s'applique sur le crayon chaud, le reste des crayons de l'assemblage auquel il appartient n'étant pas affecté (formule de sensibilité microscopique), ou sur tout l'assemblage auquel il appartient (formule de sensibilité macroscopique) :

$$\frac{\delta P}{P_o} = \sum_i \alpha_i \frac{\delta F_i}{F_{io}}$$

$$\text{var}\left(\frac{\delta P}{P_o}\right) = \sum_i \alpha_i^2 \frac{\sigma_i^2}{\mu_i^2}$$

avec $\alpha_i$ : coefficients de sensibilité microscopiques.

$$\frac{\delta P}{P_o} = \sum_i \theta_i \frac{\delta F_i}{F_{io}}$$

$$\text{var}\left(\frac{\delta P}{P_o}\right) = \sum_i \theta_i^2 \frac{\sigma_i^2}{\mu_i^2}$$

avec $\theta_i$ : coefficients de sensibilité macroscopiques.

Les coefficients $\alpha_i$ et $\theta_i$ peuvent être calculés pour différents épuisements du combustible, comme cela sera décrit par la suite. $\mu_i$ peut être mesuré ou approché comme décrit ultérieurement.

Contrairement aux procédés de l'état de la technique, on prend en compte ici une variabilité macroscopique des paramètres de fabrication. On peut également prendre en compte une variabilité microscopique de ces paramètres de fabrication.

Pour chacun des paramètres de fabrication $F_i$ considéré pour le calcul des facteurs d'incertitude technologique, une estimation avec un niveau de confiance de 95% de la valeur maximale de l'effet en puissance globale est donnée par le cumul quadratique des estimations avec un niveau de confiance de 95% des valeurs maximales des effets en puissance moyenne et locale.

On a alors :

$$F_Q^E = 1 + \sqrt{(1 - F_Q^E \text{micro})^2 + (1 - F_Q^E \text{macro})^2}$$

Pour un paramètre de fabrication $F_i$, la tolérance de fabrication $T_i$ est alors définie de telle sorte que 95 % des pastilles sont dans le domaine $F_{i0} \pm T_i$ autour de la valeur nominale $F_{i0}$. Si $F_i$ est distribué suivant une loi normale de moyenne $\mu_i$ et d'écart type $\sigma_i$ alors : $\sigma_I \leq \dfrac{T_i}{1.96}$

Pour calculer le premier facteur d'incertitude technologique $F_Q^E$, on considère :

- les variations individuelles, c'est-à-dire pastille à pastille, des paramètres de fabrication $F_i$ pour déterminer l'effet en puissance locale, et

- des variations collectives, c'est-à-dire par exemple lot de fabrication à lot de fabrication, des paramètres de fabrication $F_i$ pour déterminer l'effet en puissance moyenne..

On utilise donc les tolérances individuelles $T_i$ des pastilles pour les effets microscopiques, et les tolérances moyennes $TL_i$ d'un lot de pastilles pour les effets macroscopiques :

$$F_Q^E = 1 + \sqrt{(1 - F_Q^E micro)^2 + (1 - F_Q^E macro)^2}$$

avec

$$F_Q^E micro = 1 + \frac{1.645}{1.96} \sqrt{\sum_i \alpha_i^2 \frac{T_i^2}{\mu_i^2}}$$

et

$$F_Q^E macro = 1 + \frac{1.645}{1.96} \sqrt{\sum_i \theta_i^2 \frac{TL_i^2}{\mu_i^2}}$$

Ce calcul est identique à celui qui consisterait à calculer un facteur technologique individuel $F_Q^E(i)$ pour chaque paramètre de fabrication $F_i$ puis à effectuer le cumul de ceux-ci pour obtenir le $F_Q^E$ global.

$$F_Q^E(i) = 1 + \frac{1.645}{1.96} \sqrt{\sum_i \alpha_i^2 \frac{T_i^2}{\mu_i^2} + \sum_i \theta_i^2 \frac{TL_i^2}{\mu_i^2}}$$

Le facteur d'incertitude technologique $F_Q^E$ global serait alors de :

$$F_Q^E = 1 + \sqrt{\sum_i (1 - F_Q^E(i))^2}$$

Pour calculer le deuxième facteur d'incertitude technologique $F_{\Delta H}^{E1}$, on utilise des formules identiques, mais on considère uniquement les variations collectives, c'est-à-dire par exemple au sein d'un même lot de fabrication, des paramètres de fabrication pour déterminer l'effet en puissance locale et l'effet en puissance moyenne. On utilise donc uniquement les tolérances moyennes d'un lot de pastilles $TL_i$ :

$$F_{\Delta H}^{E1} = 1 + \sqrt{(1 - F_{\Delta H}^{E1} micro)^2 + (1 - F_{\Delta H}^{E1} macro)^2}$$

$$F_{\Delta H}^{E1}micro = 1 + \frac{1.645}{1.96}\sqrt{\sum_i \alpha_i^2 \frac{TL_i^2}{\mu_i^2}}$$

$$F_{\Delta H}^{E1}macro = 1 + \frac{1.645}{1.96}\sqrt{\sum_i \theta_i^2 \frac{TL_i^2}{\mu_i^2}}$$

Ce calcul est identique à celui qui consisterait à calculer un facteur technologique individuel pour chaque paramètre de fabrication puis à effectuer le cumul de ceux-ci pour obtenir le $F_{\Delta H}^{E1}$ global.

$$F_{\Delta H}^{E1}(i) = 1 + \frac{1.645}{1.96}\sqrt{\sum_i \alpha_i^2 \frac{TL_i^2}{\mu_i^2} + \sum_i \theta_i^2 \frac{TL_i^2}{\mu_i^2}}$$

Le facteur d'incertitude technologique $F_{\Delta H}^{E1}$ global est donc :

$$F_{\Delta H}^{E1} = 1 + \sqrt{\sum_i (1 - F_{\Delta H}^{E1}(i))^2}$$

On notera que pour $F_{\Delta H}^{E1}$ on ne prend donc pas en compte de contribution individuelle ou microscopique, mais uniquement une contribution collective ou macroscopique.

On a donc:

$$F_{\Delta H}^{E1} \leq F_Q^E$$

L'obtention des coefficients de sensibilité $\alpha_i$ et $\theta_i$ est assurée par des calculs réalisés en motif ou « cluster » pour l'aspect microscopique à l'aide de la Théorie des Perturbations Classique et Généralisée et par des calculs de modélisation de l'ensemble du coeur pour l'aspect macroscopique, comme cela va maintenant être décrit.

**Détermination des coefficients de sensibilité microscopiques**

Le procédé de détermination des coefficients de sensibilité microscopiques est analogue à celui décrit dans le mémoire de thèse de M. WILLERMOZ mentionné précédemment.

Ce procédé est fondé sur un développement de Taylor au premier ordre des puissances P des crayons (ou puissance ponctuelle) en fonction des paramètres de fabrication $F_i$.

L'hypothèse sous-jacente est la possibilité de linéariser autour des valeurs nominales $F_{io}$ et de considérer que l'impact sur le résultat final (la puissance ponctuelle P) de la variation de plusieurs variables d'entrée (les paramètres de fabrication $F_i$) est égale à la somme des impacts de chacune des variables prises séparément.

Au premier ordre, on peut donc obtenir l'impact des variations microscopiques des paramètres de fabrication sur la variation de puissance d'un crayon $\delta P/P_0$ par les coefficients de sensibilité $\alpha_i$ définis de la façon suivante :

$$\alpha_i = \frac{\left.\dfrac{\partial P}{P_0}\right|_{micro}}{\left.\dfrac{\partial F_i}{F_{io}}\right|_{micro}}$$

On choisit d'introduire ces variations sur le crayon chaud, de façon pénalisante conformément aux critères de sûreté, les autres crayons de l'assemblage contenant le crayon chaud restant au nominal. On calcule ensuite l'impact de ces perturbations sur la puissance du crayon chaud.

Les calculs de sensibilité sont réalisés en motif ou « cluster » en milieu infini à l'aide d'un code de calcul.

En effet, la décomposition du flux neutronique $\Phi$ au nominal doit faire apparaître trois termes : le flux calculé sur l'assemblage en milieu infini (flux microscopique $\Psi$), le flux calculé sur le coeur, les assemblages étant homogénéisés (flux macroscopique U), et un terme d'interface ($\chi$) présent surtout dans les gestions mixtes notamment dans le cas d'un combustible MOX. On considère alors la relation multiplicative $\Phi = U\chi\Psi$. On démontre que le terme d'interface, nécessaire pour le découpage du calcul au nominal, reste suffisamment insensible aux variations des caractéristiques du combustible et donc on limite la décomposition : $\dfrac{\delta\Phi}{\Phi} = \dfrac{\delta U}{U} + \dfrac{\delta\psi}{\psi}$

Le terme ($\delta U/U$) est obtenu en considérant les assemblages homogénéisés. Il est donc négligeable devant les variations microscopiques (crayon à crayon) puisque l'homogénéisation lisse les variations.

Il reste donc le terme dû au flux calculé sur l'assemblage du crayon chaud considéré en milieu infini.

En réalité, un assemblage en milieu infini correspond à un assemblage unique avec des conditions de courant nul. La condition de courant nul est équivalente à une symétrie miroir : l'assemblage est répété à l'infini. Ainsi, un crayon situé dans un coin de l'assemblage considéré, s'il devait être perturbé serait entouré de trois crayons perturbés dans les assemblages virtuels, alors que la modélisation voudrait que ces trois crayons restent au nominal. Pour calculer la perturbation d'un crayon sur l'assemblage en milieu infini, on redéfinit le modèle en éloignant les axes de symétrie, c'est-à-dire en utilisant un motif ou « cluster », tout en lui conservant une dimension raisonnable.

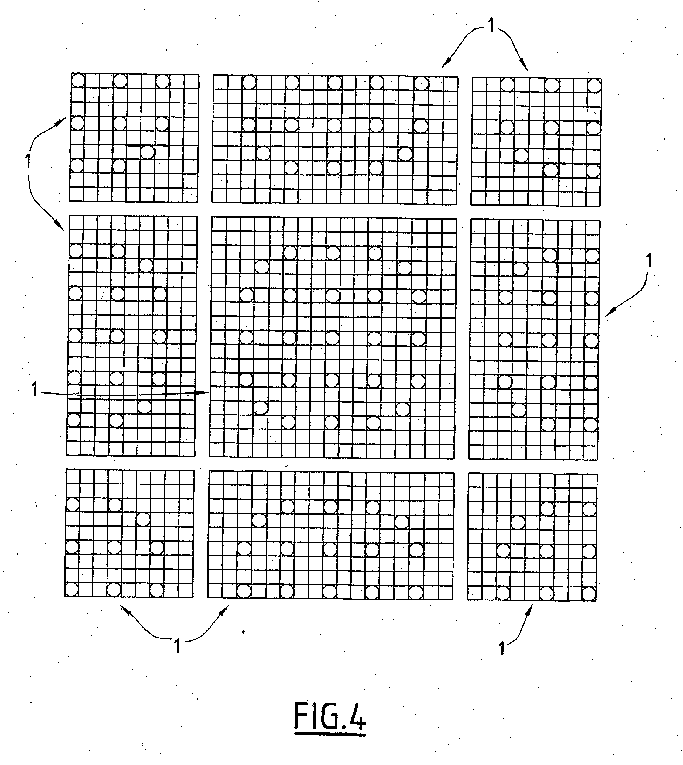

Le motif choisi comporte ainsi un assemblage 1 complet entouré de quatre moitiés et de quatre quarts d'assemblage 1. Ce motif est illustré par la figure 4. L'assemblage 1 central est celui contenant le crayon chaud.

La composition des assemblages 1 du motif sera représentative de la gestion étudiée, avec par exemple un assemblage MOX central entouré de moitiés et de quarts d'assemblages UNE dans le cas de l'étude d'un combustible MOX.

On rappelle que l'on cherche à calculer les coefficients de sensibilité $\alpha_i$ relatifs aux variations microscopiques des paramètres de fabrication $F_i$ suivants :

- le diamètre pastille **D,** ,

- la fraction volumique **$F_v$**,

- là densité géométrique **$D_g$**,

- la composition isotopique **CI** (pour le MOX),

- la teneur **t** (pour le MOX et l'UNE gadolinié),

- l'enrichissement **$e_5$** (pour l'UNE), les enrichissements **$e_4$**, **$e_5$** et **$e_6$** (pour l'URE),

- l'enrichissement de l'uranium support **es** (pour le MOX et l'UNE gadolinié).

La méthode de calcul des coefficients de sensibilité est inspirée de la séparation en deux parties des calculs neutroniques : calcul des constantes neutroniques (sections efficaces macroscopiques) par un calcul de transport et calcul de l'ensemble des paramètres du coeur en diffusion. Ce découpage provient de l'approximation de l'équation du transport en équation de la diffusion.

La méthode se décompose ainsi fonctionnellement en deux ou trois parties.

Dans cette décomposition fonctionnelle en deux parties, on fait varier les paramètres de fabrication sans passer par les concentrations d'isotopes. On obtient alors directement les coefficients de sensibilité reliant la variation relative de puissance du point chaud $\delta P/P_0$ aux variations relatives des paramètres de fabrication $\delta F_i/F_{i0}$.

La décomposition fonctionnelle en deux parties peut être schématisée ainsi :

| Paramètre de fabrication | (1a) → | Sections efficaces macroscopiques | (2a) → | Puissance Ponctuelle |
|---|---|---|---|---|

Cette décomposition fonctionnelle en deux parties est utilisée pour le diamètre pastille **D**. Elle est possible pour tous les autres paramètres étudiés, excepté pour la composition isotopique **CI** et pour l'enrichissement de l'uranium support es dans le cas du MOX.

La décomposition fonctionnelle en trois parties peut être schématisée ainsi :

| Paramètres fabrication | (1b) → | Concentrations D'isotopes | (2b) → | Sections efficaces macroscopiques | (3b) → | Puissance Ponctuelle |
|---|---|---|---|---|---|---|

On fait varier ici les concentrations d'isotopes afin d'obtenir dans un premier temps des coefficients de sensibilité reliant la variation relative de puissance du crayon chaud $\delta P/P_0$ aux variations relatives des concentrations d'isotopes $\delta n_j/n_{j0}$. Celles-ci se déduisant des variations des paramètres de fabrication $\delta F_i/F_{i0}$ (excepté pour le diamètre pastille **D**) par une simple formule analytique, indiquée ci-dessous, on obtient dans un deuxième temps les coefficients de sensibilité reliant $\delta P/P_0$ à $\delta F_i/F_{i0}$ pour $F_i \in [F_v, D_g, CI, t, e_4, e_5, e_6, es]$.

Cette décomposition fonctionnelle en trois parties est utilisée pour la composition isotopique **CI** et pour J'enrichissement de l'uranium support es dans le cas du MOX.

Elle est possible et même conseillée pour tous les autres paramètres étudiés, excepté pour le diamètre pastille **D.** Elle évite ainsi autant de calculs de sensibilité.

La partie (1 b) fait donc appel à une formulation analytique indiquée ci-dessous. Les parties (1a) et (2b) calculent les sections efficaces macroscopiques par un code de transport.

Les parties (2a) et (3b) utilisent la Théorie des Perturbations Classique et Généralisée (TPCG), comme exposé ci-dessous.

On obtient ensuite les coefficients de sensibilité $\alpha_i$ recherchés. La méthodologie que l'on développe est appliquée en début de vie du combustible. Elle est reconduite à un pas d'évolution fixé (en MWj/t).

<u>Passage des paramètres de fabrication aux concentrations d'isotopes formulation analytique (partie 1b)</u>

Cette partie concerne tous les paramètres de fabrication excepté le diamètre pastille D.

Il existe alors 2 types de formulations analytiques selon le combustible étudié.

. <u>Cas des combustibles MOX ou UNE gadoliniés :</u>

Les concentrations d'isotopes du plutonium ou du gadolinium (respectivement uranium support) dans les combustibles MOX ou UNE gadoliniés sont obtenues par la formule analytique suivante :

$$ n_j = F_v \cdot M_v \cdot t \cdot \frac{C_j}{m_j} \cdot R_{oxy} \cdot N \cdot C_{th}(T) $$

avec :

- $n_j$ : nombre d'atomes par unité de volume du cylindre enveloppe à chaud (sans évidement, ni chanfrein et après dilatation thermique)
- $F_v$ : fraction volumique (volume pastille / volume du cylindre enveloppe)
- $M_v$ : masse volumique (masse d'oxyde / volume pastille)
- t : teneur en plutonium (masse (Pu + Am) / masse (Pu + Am + U)) ou en gadolinium (masse Gd / masse (Gd + U))
- **$C_j$ :** proportion de l'isotope j (Puj = masse $Pu_j$ / masse Pu + Am) ou (Gd_j = masse $Gd_j$/ masse Gd) (respectivement Uj = masse $U_j$/ masse U)

- $m_j$ : masse atomique de l'isotope j
- $R_{oxy}$ : rapport d'oxyde (masse de métal / masse d'oxyde)
- N : constante liée au nombre d'Avogadro (= 0.6022094 noyaux par Å$^3$)
- $C_{th}(T)$ : coefficient de dilatation thermique (de la pastille) à la température T.

La masse volumique $M_v$ est égale au produit de la densité géométrique Dg et de la densité théorique $\rho_{th}$ du combustible. La densité théorique $\rho_{th}$ du combustible est fonction de la teneur **t**, mais ses variations $\delta\rho_{th}/\rho_{th}$ sont négligeables vis-à-vis des variations $\delta t/t_0$.
Les variations $\delta M_v/M_{v0}$ sont donc égales aux variations $\delta D_g /D_{g0}$.
Les valeurs $m_j$ et N sont des constantes donc ne varient pas avec les paramètres de fabrication.
Les paramètres $C_{th}(T)$ et $R_{oxy}$ sont a priori fonction du point de fonctionnement du réacteur étudié et des paramètres de fabrication $F_i$ avec $F_i \in [F_v, D_g, Cl, t, es]$, mais on peut facilement négliger leurs variations vis-à-vis des variations $\delta F_i/F_{io}$.
On obtient ainsi les variations relatives des concentrations d'isotopes $\delta n_j/n_{j0}$ à partir des variations des paramètres de fabrication $\delta F_i/F_{i0}$ avec $F_i \in [F_v, D_g, Cl, t, es]$.

. Cas des combustibles UNE et URE :

Les concentrations d'isotopes de l'uranium dans les combustibles UNE et URE sont obtenues par la formule analytique suivante :

$$n_j = F_v \cdot M_v \cdot \frac{C_j}{m_j} \cdot R_{oxy} \cdot N \cdot C_{th}(T)$$

avec :

- $n_j$ : nombre d'atomes par unité de volume du cylindre enveloppe à chaud (sans évidement ni chanfrein après dilatation thermique)
- $F_v$ : fraction volumique (volume pastille / volume du cylindre enveloppe)
- $M_v$ : masse volumique (masse d'oxyde / volume pastille)
- $C_j$ : proportion de l'isotope j (Uj = masse $U_j$ / masse U)
- $m_j$ : masse atomique de l'isotope j
- $R_{oxy}$ : rapport d'oxyde (masse de métal / masse d'oxyde)
- N : constante liée au nombre d'Avogadro
- $C_{th}(T)$ : coefficient de dilatation thermique (de la pastille) à la température T.

Comme précédemment, on obtient ainsi les variations relatives des concentrations d'isotopes $\delta n_j/n_{j0}$ à partir des variations des paramètres de fabrication $\delta F_i/F_{i0}$ avec $F_i \in [F_v, D_g, e_4, e_5, e_6]$.

Passage des paramètres de fabrication ou des concentrations d'isotopes aux sections efficaces (parties 1a et 2b)

Si l'on choisit l'option la moins coûteuse en terme de nombre de calculs, ce que l'on préconise comme méthode, on déterminera les variations des sections efficaces macroscopiques à l'aide d'un code de transport en calculant l'impact seulement :

- d'une variation relative d'environ + 10 % des concentrations d'isotopes $n_j$ pour la reconstruction des coefficients de sensibilité relatifs aux paramètres $F_i \in [F_v, D_g, Cl, t, e_4, e_5, e_6, es]$,
- d'une variation relative d'environ + 1 % du diamètre pastille D.

Sinon, on déterminera les variations des sections efficaces macroscopiques à l'aide du code de transport en calculant l'impact de chacune des variations suivantes :

- variation relative d'environ + 10 % des concentrations d'isotopes $n_j$ pour la reconstruction des coefficients de sensibilité relatifs à **Cl** et à es dans le cas du MOX seulement.
- variation relative d'environ + 1% du diamètre pastille D,
- variation relative d'environ + 10 % des paramètres $F_i \in [t, e_4, e_5, e_6, es]$ (excepté **es** du MOX),

- variation relative d'environ + 1 % à + 1.5 % de la fraction volumique $F_v$,
- variation relative d'environ + 1 % à + 1.5 % de la densité géométrique $D_g$.

Ces valeurs peuvent être modulées en fonction du combustible nucléaire étudié afin de conserver une variation ayant un sens pour la convergence du code utilisé.

Passage des sections efficaces à la puissance du crayon chaud : la TPCG (parties 2a et 3b)

La variation relative de la puissance du crayon chaud est obtenue au premier ordre par la somme de deux termes :

- la partie directe qui dépend explicitement de la variation des sections efficaces macroscopiques,
- la partie spectrale qui dépend de la variation du flux, évaluée par le calcul de la fonction importance.

La partie directe se détermine par le produit de la variation de la section efficace de puissance et du flux :

$$\frac{\langle \delta\kappa\Sigma_f,\Phi\rangle_{crayon}}{\langle \kappa\Sigma_f,\Phi\rangle_{crayon}} - \frac{\langle \delta\kappa\Sigma_f,\Phi\rangle_{motif}}{\langle \kappa\Sigma_f,\Phi\rangle_{motif}}$$

La partie spectrale est obtenue classiquement par le produit de la fonction importance $\Gamma$ avec la perturbation et le flux :

$$-\left\langle \Gamma,\left(\delta A - \frac{\delta F}{k}\right)\Phi\right\rangle_{motif}$$

L'équation à résoudre pour calculer la fonction importance r est de la forme de l'équation de Boltzmann en diffusion avec un terme source S :

$$\left(A - \frac{F}{k}\right) * \Gamma = S = \frac{\kappa\Sigma_{f\,crayon}}{\langle \kappa\Sigma_f,\Phi\rangle_{crayon}} - \frac{\kappa\Sigma_{f\,motif}}{\langle \kappa\Sigma_f,\Phi\rangle_{motif}}$$

où A et F sont les opérateurs d'absorption et de production en diffusion.
La variation relative de la puissance du crayon chaud s'exprime alors par:

$$\frac{\delta P}{P_0} = \frac{\langle \delta\kappa\Sigma_f,\Phi\rangle_{crayon}}{\langle \kappa\Sigma_f,\Phi\rangle_{crayon}} - \frac{\langle \delta\kappa\Sigma_f,\Phi\rangle_{motif}}{\langle \kappa\Sigma_f,\Phi\rangle_{motif}} - \left\langle \Gamma,\left(\delta A - \frac{\delta F}{k}\right)\Phi\right\rangle_{motif}$$

Obtention des coefficients de sensibilité

On a, pour $F_i \in [\,D\,,\,F_v\,,\,D_g\,,\,CI\,,\,t\,,\,e_4\,,\,e_5\,,\,e_6\,,\,es\,]$ :

$$\frac{\delta P}{P_0} = \sum_j \gamma_j \frac{\delta n_j}{n_{j0}} + \alpha_D \frac{\delta D}{D_0} = \sum_i \alpha_i \frac{\delta F_i}{F_{i0}}$$

Selon la méthode, on passe par les concentrations d'isotopes $n_j$ pour $F_i \in [\, F_v\,,\, D_g\,,\, Cl\,,\, t\,,\, e_4\,,\, e_5\,,\, e_6\,,\, es\,]$. On calcule alors les coefficients de sensibilité $\gamma_j$ qui relient les variations relatives des concentrations d'isotopes à la variation relative de puissance du point chaud :

$$\gamma_j = \frac{\dfrac{\partial P}{P_0}}{\dfrac{\partial n_j}{n_{j0}}} = \frac{\dfrac{\langle \delta\kappa\Sigma_f, \Phi\rangle_{crayon}}{\langle \kappa\Sigma_f, \Phi\rangle_{crayon}} - \dfrac{\langle \delta\kappa\Sigma_f, \Phi\rangle_{motif}}{\langle \kappa\Sigma_f, \Phi\rangle_{motif}} - \left\langle \Gamma, \left(\delta A - \dfrac{\delta F}{k}\right)\Phi\right\rangle_{motif}}{\dfrac{\partial n_j}{n_{j0}}}$$

Connaissant $\delta n_j / n_{j0}$ fonction de $\delta F_i / F_{i0}$, on en déduit les coefficients de sensibilité recherchés $\alpha_i$ pour $F_i \in [\, F_v\,,\, D_g\,,\, Cl\,,\, t\,,\, e_4\,,\, e_5\,,\, e_6\,,\, es\,]$ pour chaque type de combustible.

Pour le diamètre pastillé D, on calcule le coefficient de sensibilité $\alpha_D$ qui relie directement la variation relative du diamètre pastille à la variation relative de puissance du point chaud :

$$\alpha_D = \frac{\dfrac{\partial P}{P_0}}{\dfrac{\partial D}{D_0}} = \frac{\dfrac{\langle \delta\kappa\Sigma_f, \Phi\rangle_{crayon}}{\langle \kappa\Sigma_f, \Phi\rangle_{crayon}} - \dfrac{\langle \delta\kappa\Sigma_f, \Phi\rangle_{motif}}{\langle \kappa\Sigma_f, \Phi\rangle_{motif}} - \left\langle \Gamma, \left(\delta A - \dfrac{\delta F}{k}\right)\Phi\right\rangle_{motif}}{\dfrac{\partial D}{D_0}}$$

Au cours de l'épuisement du combustible, les concentrations des isotopes lourds évoluent, des produits de fission sont créés, ce qui modifie le spectre neutronique. Le problème est alors de déterminer l'évolution au cours de l'irradiation de l'impact d'une perturbation sur le combustible "frais".

Pour ce faire, la méthodologie reste inchangée. Seuls les paramètres qui rentrent en compte dans la détermination des coefficients de sensibilité changent en fonction de l'épuisement, c'est-à-dire:

- les variations des sections efficaces macroscopiques calculées pour chaque épuisement à partir de l'impact des variations des concentrations d'isotopes et/ou des paramètres de fabrication à 0 MWj/t,

- la fonction importance r calculée pour chaque épuisement.

On peut alors relier directement les variations relatives des paramètres de fabrication à 0 MWj/t à la variation relative de puissance du point chaud à l'épuisement BU par les coefficients de sensibilité microscopiques $\alpha_{i|BU}$ :

$$\left.\frac{\delta P}{P_0}\right|_{BU} = \sum_i \alpha_{i|BU} \left.\frac{\delta F_i}{F_{i0}}\right|_{BU=0}$$

Ces coefficients peuvent être calculés à tout épuisement.

De manière pratique ils sont calculés uniquement pour l'épuisement de 150 MWj/t puisque c'est à cet épuisement que les facteurs d'incertitude technologique s'avèrent maximaux.

Si besoin, les coefficients peuvent être déterminés pour plusieurs épuisements jusqu'à environ 50 000 MWj/t ou 60 000 MWj/t.

Détermination des coefficients de sensibilité macroscopiques

Comme pour l'aspect microscopique, la méthode mise en oeuvre est basée sur un développement de Taylor au premier ordre des puissances ponctuelles P des crayons, fonction des paramètres de fabrication $F_i$.

Au premier ordre, on peut donc obtenir l'impact des variations macroscopiques des paramètres de fabrication sur la variation de puissance d'un crayon δP/P$_0$ par les coefficients de sensibilité θ$_i$, définis de la façon suivante :

$$\theta_i = \frac{\left.\dfrac{\partial P}{P_0}\right|_{macro}}{\left.\dfrac{\partial F_i}{F_{i0}}\right|_{macro}}$$

Les variations macroscopiques des paramètres de fabrication considérées ici affectant au moins un assemblage, on choisit d'introduire ces variations sur tout un assemblage en coeur et un seul, cette situation étant considérée comme réaliste et suffisamment pénalisante. On calcule ensuite l'impact de ces perturbations sur la puissance du point chaud.

Le choix de l'assemblage à perturber en coeur est fonction de la gestion de référence considérée. De façon générique, on prendra comme gestion de référence la gestion prévisionnelle ayant servi de base au développement de l'assemblage combustible étudié. Dans cette gestion, on étudie alors la position de l'assemblage 1 qui porte le crayon chaud.

Trois cas se présentent :

- si c'est un assemblage neuf du type du combustible nucléaire étudié qui comprend le crayon chaud, c'est sur cet assemblage qu'on introduit les variations macroscopiques des paramètres de fabrication. On étudie alors l'impact de ces variations sur la puissance du crayon chaud au cours d'un cycle seulement, car l'expérience montre que la valeur des coefficients de sensibilité diminue dans le temps ;
- si c'est un assemblage neuf ou épuisé qui comprend le crayon chaud mais qui n'est pas du type de combustible nucléaire étudié, on introduit ces variations sur l'assemblage neuf du type de combustible nucléaire étudié ayant le facteur de pic de puissance radiale Fxy le plus élevé parmi les assemblages neufs. Comme dans le cas précédent, on étudie alors l'impact de ces variations sur la puissance du crayon chaud au cours d'un cycle seulement ;
- si c'est un assemblage épuisé du type de combustible nucléaire étudié qui porte crayon chaud, on introduit ces variations une première fois sur cet assemblage épuisé au cycle où celui-ci est chargé en coeur et une deuxième fois sur l'assemblage neuf du type combustible recherché ayant le Fxy le plus élevé parmi les assemblages neufs. On devrait alors vérifier que les coefficients de sensibilité obtenus à partir de l'assemblage épuisé sont plus faibles que ceux obtenus à partir de l'assemblage neuf, car la valeur des coefficients de sensibilité diminue en principe au cours du temps.

La méthode de calcul des coefficients de sensibilité θ$_i$ est semblable à celle développée pour l'aspect microscopique, le calcul TPCG sur un motif étant remplacé par des calculs de modélisation de l'ensemble du coeur à l'aide d'une chaîne de calcul comprenant un code de transport.

Pour des raisons de précision dans les calculs de modélisation du coeur, on choisit :

- la décomposition en deux parties pour les paramètres de fabrication F$_i$ ∈ [ D , D$_g$ , CI , t , e$_4$ , e$_5$ , e$_6$ ], le coefficient relatif à F$_v$ étant pris égal à celui calculé pour D$_g$,
- la décomposition en trois parties pour les paramètres CI et es d'un combustible MOX de la correction de teneur.

La partie (1b) fait appel à une formulation analytique. Elle est identique à celle utilisée pour l'aspect microscopique.

Les parties (1a) et (2b) calculent les sections efficaces macroscopiques par le code de transport.

Les parties (2a) et (3b) sont réalisées par des calculs directs de modélisation de l'ensemble du coeur.

On obtient ensuite les coefficients de sensibilité θ$_i$ recherchés. La méthodologie développée en début de vie du combustible nucléaire est reconduite à un pas d'évolution fixé (en MWj/t).

Passage des paramètres de fabrication ou des concentrations d'isotopes aux sections efficaces (parties 1a et 2b)

Afin d'avoir une différence significative dans les écarts en puissance relevés et d'éviter ainsi les imprécisions liées aux calculs de modélisation, on est amené à choisir des valeurs de variations des variables d'entrée suffisamment fortes pour certains paramètres, tout en s'efforçant de rester dans l'hypothèse de linéarité.

On détermine ainsi les variations des sections efficaces macroscopiques à l'aide du code de transport en calculant l'impact :

- d'une variation relative d'en général + 10 % des concentrations d'isotopes $n_j$ pour la reconstruction des coefficients relatifs à la CI et à **es** dans le cas du MOX, voire plus (jusqu'à + 60 %) pour certains isotopes ayant des concentrations faibles,
- d'une variation relative d'environ + 1.5 % du diamètre pastille D,
- d'une variation relative d'environ + 5 % de la densité géométrique $\mathbf{D_g}$,
- d'une variation relative d'environ + 10 % des paramètres $F_i \in [\, t\, , e_5\, ]$,
- d'une variation relative d'environ + 60 % de l'enrichissement $e_4$ et + 20 % de l'enrichissement $\mathbf{e_6}$ dans le cas de l'URE.

On rappelle que le coefficient relatif à $F_v$ est pris égal à celui calculé pour **Dg**. On ne fait donc pas de calcul pour $F_v$.

Ces valeurs peuvent être modulées en fonction du combustible nucléaire étudié afin de conserver une variation ayant un sens pour la convergence du code utilisé.

<u>Passage des sections efficaces à la puissance du point chaud (parties 2a et 3b)</u>

A la suite de l'étape décrite précédemment, on a à disposition :

- une bibliothèque de sections macroscopiques de référence correspondant aux caractéristiques nominales du combustible étudié,
- autant de bibliothèques de sections macroscopiques "perturbées" que d'isotopes $\mathbf{CI_j}$ pour les paramètres **CI** et **es** du MOX,
- une bibliothèque de sections macroscopiques "perturbées" pour chaque paramètre de fabrication $F_i \in [\, D\, , D_g\, , t\, , e_4\, , e_5\, , e_6\, ]$.

Un premier calcul direct de modélisation de l'ensemble du coeur à partir de la bibliothèque de référence donne la puissance du point chaud de référence $P_0^{\text{réf}}$ (parfois notée simplement $P_0$).

Pour chacun des paramètres de fabrication $F_i \in [\, D\, , D_g\, , CI_j\, , t\, , e_4\, , e_5\, , e_6\, ]$, un calcul de modélisation de l'ensemble du coeur à partir de la bibliothèque perturbée correspondante donne la puissance du point chaud perturbée $P^{\text{pert}}(F_i)$.

On obtient ainsi la variation relative de puissance du point chaud $\delta P/P_0(F_i)$ pour chaque paramètre de fabrication $F_i \in [\, D\, , D_g\, , CI_j\, , t\, , e_4\, , e_5\, , e_6\, ]$ :

$$\frac{\delta P}{P_0}(F_i) = \frac{P^{\text{pert}}(F_i) - P_0^{\text{ref}}}{P_0^{\text{ref}}}$$

<u>Obtention des coefficients de sensibilité</u>

On a :

$$\frac{\delta P}{P_0} = \sum_j \mu_j \frac{\delta n_j}{n_{j0}} + \sum_i \theta_i \frac{\delta F_i}{F_{i0}}$$

Pour $F_i \in [\, CI\, , es\, ]$ dans le cas d'un combustible MOX, on passe par les concentrations d'isotopes $n_j$. On calcule alors les coefficients de sensibilité $\mu_j$ reliant les variations relatives des concentrations d'isotopes à la variation relative de puissance du point chaud :

$$\mu_j = \frac{\dfrac{\partial P}{P_0}}{\dfrac{\partial n_j}{n_{j0}}} = \frac{\dfrac{P^{pert}(CI_j) - P_0^{ref}}{P_0^{ref}}}{\dfrac{\partial n_j}{n_{j0}}}$$

Connaissant $\delta n_j / n_{j0}$ fonction de $\delta F_i / F_{i0}$, on en déduit les coefficients de sensibilité recherchés $\theta_i$ pour les paramètres **CI** et **es** du MOX.

Pour les autres paramètres $F_i \in [D, D_g, t, e_4, e_5, e_6]$, on calcule directement les coefficients de sensibilité $\theta_i$ reliant les variations relatives des paramètres de fabrication $F_i$ à la variation relative de puissance du point chaud, le coefficient relatif à $F_v$ étant pris égal à celui calculé pour $D_g$ :

$$\theta_i = \frac{\dfrac{\partial P}{P_0}}{\dfrac{\partial F_i}{F_{i0}}} = \frac{\dfrac{P^{pert}(F_i) - P_0^{ref}}{P_0^{ref}}}{\dfrac{\partial F_i}{F_{i0}}}$$

Comme pour l'aspect microscopique, il peut être utile de déterminer l'évolution au cours de l'irradiation de l'impact d'une perturbation sur le combustible "frais". La méthodologie reste inchangée.

On peut alors relier directement les variations relatives des paramètres de fabrication à 0 MWj/t à la variation relative de puissance du point chaud à l'épuisement BU par les coefficients de sensibilité macroscopiques $\theta_{i|_{BU}}$ :

$$\left.\frac{\delta P}{P_0}\right|_{BU} = \sum_i \theta_i\Big|_{BU} \left.\frac{\delta F_i}{F_{i0}}\right|_{BU=0}$$

Ces coefficients peuvent être calculés à tout épuisement.

De manière pratique ils sont calculés uniquement pour l'épuisement de 150 MWj/t puisque c'est à cet épuisement que les facteurs d'incertitude technologique sont maximaux.

Si besoin, les coefficients peuvent être déterminés pour plusieurs épuisements généralement sur un cycle d'irradiation.

Ces coefficients étant connus, on peut alors déterminer les facteurs d'incertitude technologique.

En résumé, si on note $T_i$ et $TL_i$ la tolérance individuelle des pastilles et la tolérance collective d'un lot de pastilles associées à un paramètre de fabrication Fi, alors les facteurs d'incertitude technologique $F_Q^E$ et $F_{\Delta H}^{E1}$ peuvent être déterminés comme suit :

-   pour du combustible UNE :

$$F_Q^E = 1 + \frac{1.645}{1.96} \sqrt{\sum_{i \in [D, Fv, Dg, e]} \left( \alpha_i^2 \frac{T_i^2}{\mu_i^2} + \theta_i^2 \frac{TL_i^2}{\mu_i^2} \right)} \quad (1)$$

$$F_{\Delta H}^{E1} = 1 + \frac{1.645}{1.96} \sqrt{\sum_{i \,\in[D,Fv,Dg,e]} \left( \alpha_i^2 \, \frac{TL_i^2}{\mu_i^2} + \theta_i^2 \, \frac{TL_i^2}{\mu_i^2} \right)} \quad (2)$$

- pour du combustible UNE à crayons gadolinés :

$$F_Q^E = 1 + \frac{1.645}{1.96} \sqrt{\sum_{i \,\in[D,Fv,Dg,es,t]} \left( \alpha_i^2 \, \frac{T_i^2}{\mu_i^2} + \theta_i^2 \, \frac{TL_i^2}{\mu_i^2} \right)} \quad (3)$$

$$F_{\Delta H}^{E1} = 1 + \frac{1.645}{1.96} \sqrt{\sum_{i \,\in[D,Fv,Dg,es,t]} \left( \alpha_i^2 \, \frac{TL_i^2}{\mu_i^2} + \theta_i^2 \, \frac{TL_i^2}{\mu_i^2} \right)} \quad (4)$$

- pour du combustible URE :

$$F_Q^E = 1 + \frac{1.645}{1.96} \sqrt{\sum_{i \,\in[D,Fv,Dg,CI]} \left( \alpha_i^2 \, \frac{T_i^2}{\mu_i^2} + \theta_i^2 \, \frac{TL_i^2}{\mu_i^2} \right)} \quad (5)$$

$$F_{\Delta H}^{E1} = 1 + \frac{1.645}{1.96} \sqrt{\sum_{i \,\in[D,Fv,Dg,CI]} \left( \alpha_i^2 \, \frac{TL_i^2}{\mu_i^2} + \theta_i^2 \, \frac{TL_i^2}{\mu_i^2} \right)} \quad (6)$$

- pour du combustible MOX :

$$F_{\Delta H}^{E1} = 1 + \frac{1.645}{1.96} \sqrt{\sum_{i \,\in[D,Fv,Dg,t,CI]} \left( \alpha_i^2 \, \frac{TL_i^2}{\mu_i^2} + \theta_i^2 \, \frac{TL_i^2}{\mu_i^2} \right)} \quad (7)$$

$$F_Q^E = 1 + \frac{1.645}{1.96} \sqrt{\sum_{i \,\in[D,Fv,Dg,t,CI]} \left( \alpha_i^2 \, \frac{T_i^2}{\mu_i^2} + \theta_i^2 \, \frac{TL_i^2}{\mu_i^2} \right)} \quad (8)$$

Par ailleurs, et comme exposé ci-dessus, on est capable de calculer les coefficients de sensibilité microscopiques $\alpha_i$, et macroscopiques $\theta_i$ pour chaque type de combustible.

Ainsi, on peut d'une part à partir des valeurs de coefficients de sensibilité calculées, et d'autre part des formules (1) à (8) ci-dessus déterminer les facteurs d'incertitude technologique pour divers types de combustible nucléaire.

Ce procédé de détermination des facteurs d'incertitude technologique peut être utilisé par exemple pour :

- dimensionner les tolérances de fabrication de pastilles de combustible nucléaire à fabriquer,
- émettre un avis en cours de fabrication sur la possibilité d'utilisation de pastilles de combustible nucléaire fabriquées, au cas où une anomalie serait intervenue dans la fabrication, et
- évaluer les facteurs d'incertitude technologique pour des pastilles de combustible nucléaire issus de fabrication.

Dans le premier de ces cas, les valeurs de $\mathbf{F_Q^E}$ et de $\mathbf{F_{\Delta H}^{E1}}$ sont connues et dépendent du réacteur dans lequel le combustible nucléaire à fabriquer doit être chargé. On connaît également en fonction du type de combustible à fabriquer les valeurs des coefficients de sensibilité $\alpha_i$, et $\theta_i$ pertinents. On utilise en tant que moyennes $\mu_i$ pour les paramètres $F_i$ les valeurs nominales $F_{io}$. On est alors capable, par exemple de manière itérative, de déterminer les tolérances individuelles $T_i$ et collectives $TL_i$ de fabrication pour les paramètres de fabrication $F_i$ pertinents.

Ainsi, on définit des valeurs pour $T_i$ et $TL_i$ puis on détermine, grâce au procédé décrit ci-dessus, les valeurs correspondantes des facteurs d'incertitude technologique.

Si ces valeurs dépassent les valeurs limites autorisées on diminue les valeurs $T_i$ et $TL_i$ puis on détermine à nouveau les valeurs des facteurs d'incertitude technologique, et ainsi de suite jusqu'à respecter les valeurs limites fixées pour le réacteur considéré.

On rappelle que $T_i$ correspond à la tolérance individuelle que chaque pastille 23 devrait respecter, c'est-à-dire que les valeurs réelles mesurées pour Fi devraient être dans l'intervalle $F_{i0} \pm T_i$ pour 95% des pastilles. $TL_i$ correspond à la tolérance que la moyenne des valeurs réelles mesurées pour un lot issu de la même fabrication devrait respecter, c'est-à-dire que pour 95% des lots la moyenne des valeurs réelles de $F_i$ devrait être dans l'intervalle $F_{i0} \pm TL_i$.

$T_i$ est donc qualifiée de tolérance individuelle ou microscopique et $TL_i$ de tolérance collective ou macroscopique.

Une fois ces tolérances individuelles et collectives déterminées, elles sont fournies au fabriquant de pastilles qui bénéficie ainsi des contraintes qu'il doit respecter pour la fabrication.

Pour accroître la liberté du fabncant de pastilles, il est également possible de lui fournir les moyens de calculer lui-même les facteurs d'incertitude technologique à partir des tolérances individuelles et collectives. Dans ce cas, on ne lui communique que les valeurs limites de facteur d'incertitude technologique à respecter et détermine lui-même les valeurs de $T_i$ et $TL_i$ correspondantes.

Dans le deuxième des cas mentionnés ci-dessus, si, pour un lot de fabrication, l'une ou plusieurs des tolérances $T_i$ et $TL_i$ n'est pas satisfaite, le fabricant de pastilles fournit les valeurs réelles des paramètres $F_i$ mesurées pour le lot de pastilles correspondant. Ces mesures ont pu n'être effectuées que sur un échantillon statistiquement représentatif du lot fabriqué.

Pour chacun des paramètres $F_i$, on va utiliser dans les formules (1) à (8) ci-dessus à la place de la tolérance individuelle $T_i$, l'écart maximal entre les valeurs réelles mesurées dans les pastilles du lot et la valeur nominale $F_{io}$. Cet écart est appelé écart individuel $E_i$.

A la place de la tolérance collective $TL_i$, on va prendre en compte la moyenne des écarts entre les valeurs réelles mesurées dans l'échantillon prélevé et la valeur nominale. Cet écart est dénommé écart collectif et noté $EL_i$.

On utilise en tant que moyenne $\mu_i$ la moyenne des valeurs effectivement mesurées pour $F_i$.

On injecte ces paramètres $E_i$, $EL_i$ et $\mu_i$ dans les formules de calcul (1) à (8), ce qui permet d'obtenir des valeurs des facteurs d'incertitude technologique $\mathbf{F_Q^E}$ et $\mathbf{F_{\Delta H}^{E1}}$ pour le lot de pastilles fabriquées.

On peut alors vérifier si, malgré le non-respect de certaines tolérances de fabrication $T_i$ et $TL_i$, les pastilles fabriquées permettent d'obtenir des valeurs de facteurs d'incertitude technologique inférieures aux valeurs limites du réacteur considéré.

En effet, des compensations entre les différents paramètres $F_i$ peuvent intervenir et permettre, malgré le dépassement d'une tolérance pour un paramètre de fabrication, de conserver des valeurs de facteurs d'incertitude technologique acceptables

Dans le troisième des cas mentionné ci-dessus, on peut comme dans le deuxième des cas, à partir des moyennes $\mu_i$ et des écarts $E_i$ et EL, déterminés à partir des mesures de valeurs réelles sur des pastilles fabriquées, confirmer que les contraintes exprimées en terme de valeurs limites de facteurs d'incertitude technologique sont respectées.

Le procédé de détermination des facteurs d'incertitude mentionné ci-dessus s'avère plus précis que ceux de l'état de la technique. En effet, la prise en compte d'une variation macroscopique, s'avère déterminante.

A valeurs limites de facteurs d'incertitude technologique égales, on s'est rendu compte que ce procédé permet en production de réduire la dispersion des valeurs réelles des paramètres de fabrication $F_i$ par rapport aux valeurs nominales $F_{io}$. Il est donc possible d'accroître les tolérances de fabrication utilisées par les fabricants de pastilles, tout en respectant les mêmes contraintes en termes de facteur d'incertitude technologique.

Les fabricants de pastilles gagnent donc en souplesse, ce qui permet de réduire les coûts de production des combustibles nucléaires, à sécurité égale.

De même, cela permet d'autoriser l'utilisation de combustibles nucléaires qui auraient été auparavant rejetés, alors qu'ils satisfaisaient aux contraintes exprimées en termes de valeur limite de facteur d'incertitude technologique.

Inversement, à tolérances de fabrication constantes, il serait possible de réduire les valeurs de facteurs d'incertitude technologique pris en compte pour la gestion des réacteurs nucléaires, et donc d'augmenter la manoeuvrabilité de ces derniers. Cela permettrait également d'effectuer des économies.

L'invention peut être mise en oeuvre en utilisant d'autres calculs que ceux des exemples décrits ci-dessus. Toutefois, on prendra toujours en compte, pour au moins un paramètre de fabrication, un aspect macroscopique, comme dans l'exemple décrit ci-dessus pour $F_{\Delta H}^{EI}$ ou en combinaison un aspect microscopique et un aspect macroscopique, comme dans l'exemple décrit ci-dessus pour $F_Q^E$ .

Dans l'exemple décrit ci-dessus, seuls des éléments de combustible nucléaire pour les réacteurs à eau légère pressurisée ont été pris en compte.

Toutefois, l'invention peut également s'appliquer à la fabrication de combustibles d'autres réacteurs à eau légère, par exemple les réacteurs à eau bouillante.

De même, elle peut s'appliquer à des combustibles nucléaires pour d'autres types de réacteurs, comme par exemple les réacteurs à haute température (HTR).

Les éléments de combustibles nucléaires considérés ne sont donc pas nécessairement des pastilles, mais peuvent être des sphères.

## Revendications

1. Procédé de détermination d'au moins un facteur d'incertitude technologique d'éléments (23) de combustible nucléaire, en fonction des variations de paramètres de fabrication des éléments (23) autour de valeurs nominales, **caractérisé en ce que** le procédé comprend une étape d'utilisation, pour au moins un paramètre de fabrication, d'une variation collective dudit paramètre autour de la valeur nominale au sein d'un lot d'éléments (23) fabriqués:

2. Procédé selon la revendication 1, dans lequel on utilise pour au moins un paramètre, outre ladite variation collective, une variation individuelle du paramètre autour de la valeur nominale pour un élément (23) individuel.

3. Procédé selon l'une des revendications 1 et 2, dans lequel on détermine le facteur d'incertitude technologique pour la puissance linéique au point chaud $F_Q^E$ .

4. Procédé selon l'une des revendications précédentes, dans lequel on détermine le facteur d'incertitude technologique de canal chaud $F_{\Delta H}^{EI}$ .

5. Procédé selon l'une des revendications précédentes, dans lequel on multiplie la variation collective par un coefficient de sensibilité macroscopique et éventuellement la variation individuelle par un coefficient de sensibilité microscopique.

6. Procédé selon les revendications 2, 3 et 5 prises en combinaison, dans lequel on utilise une formule du type

$$F_Q^E = 1 + \frac{1.645}{1.96} \sqrt{\sum_i \left( \alpha_i^2 \ \frac{T_i^2}{\mu_i^2} + \theta_i^2 \ \frac{TL_i^2}{\mu_i^2} \right)}$$

où $T_I$ et $TL_I$ désignent respectivement les variations individuelle et collective pour un paramètre de fabrication $F_i$, $\alpha_i$ et $\theta_i$ désignent respectivement les coefficients de sensibilité microscopique et macroscopique pour le paramètre de fabrication, et $\mu_i$ désigne la moyenne pour le paramètre de fabrication $F_i$.

7. Procédé selon les revendications 2, 4 et 5 prises en combinaison, dans lequel on utilise une formule du type :

$$F_{\Delta H}^{EI} = 1 + \frac{1.645}{1.96} \sqrt{\sum_i \left( \alpha_i^2 \, \frac{TL_i^2}{\mu_i^2} + \theta_i^2 \, \frac{TL_i^2}{\mu_i^2} \right)}$$

où $TL_i$ désigne la variation collective pour un paramètre de fabrication $F_i$, $\alpha_i$ et $\theta_i$ désignent respectivement les coefficients de sensibilité microscopique et macroscopique pour le paramètre de fabrication, et $\mu_i$ désigne la moyenne pour le paramètre de fabrication $F_i$.

8. Procédé selon l'une des revendications précédentes, dans lequel la variation collective est une tolérance collective, l'écart entre la moyenne des valeurs réelles du paramètre de fabrication au sein d'un lot d'éléments (23) et la valeur nominale devant respecter cette tolérance collective, et dans lequel, éventuellement, la variation individuelle est une tolérance individuelle, l'écart entre la valeur réelle du paramètre de fabrication pour un élément (23) individuel et la valeur nominale devant respecter la tolérance individuelle.

9. Procédé de conception d'un élément (23) de combustible nucléaire, le procédé comprenant une étape d'utilisation d'un procédé de détermination selon l'une des revendications précédentes.

10. Procédé de conception selon la revendication 9, l'élément (23) de combustible nucléaire devant respecter une valeur limite pour au moins un facteur d'incertitude technologique, le procédé comprenant des étapes de :

- définition d'une tolérance collective de fabrication au moins pour ledit paramètre de fabrication, l'écart entre la moyenne des valeurs réelles dudit paramètre dans un lot d'éléments (23) fabriqués et la valeur nominale dudit paramètre devant respecter la tolérance collective,
- éventuellement définition d'une tolérance individuelle de fabrication au moins pour ledit paramètre de fabrication, l'écart individuel entre la valeur réelle du paramètre de fabrication pour un élément (23) individuel et la valeur nominale dudit paramètre pour un élément (23) fabriqué et la valeur nominale dudit paramètre devant respecter la tolérance individuelle, et
- détermination de la valeur dudit facteur d'incertitude technologique à partir d'un procédé selon l'une des revendications 1 à 6, en utilisant en tant que variation collective la tolérance collective de fabrication définie et éventuellement en tant que variation individuelle la tolérance individuelle définie, et
- comparaison de la valeur déterminée du facteur d'incertitude technologique avec la valeur limite pour valider les tolérances de fabrication définies.

11. Procédé de fabrication d'éléments (23) de combustible nucléaire conçus par un procédé selon l'une des revendications 7 ou 8.

12. Procédé de contrôle d'éléments (23) de combustible nucléaire fabriqués, le procédé comprenant les étapes de :

- utilisation d'un procédé selon l'une des revendications 1 à 8 pour déterminer la valeur d'au moins un facteur d'incertitude technologique pour les éléments (23) de combustible nucléaire fabriqués, en utilisant en tant que variation collective l'écart entre une moyenne des valeurs réelles dudit paramètre mesurées dans un lot des éléments fabriqués et la valeur nominale dudit paramètre, et éventuellement en tant que variation individuelle l'écart entre une valeur réelle effectivement mesurée sur un élément (23) fabriqué et la valeur nominale dudit paramètre,
- comparaison avec une valeur limite de facteur d'incertitude technologique que les éléments de combustible nucléaire doivent respecter afin de rendre un verdict sur les éléments (23) de combustible nucléaire fabriqués.

**Patentansprüche**

1. Verfahren zum Ermitteln mindestens eines technologischen Unsicherheitsfaktors für Kernbrennstoffelemente (23) in Abhängigkeit der Variationen von Herstellungsparametern der Elemente (23) um Sollwerte herum, **dadurch gekennzeichnet, dass** das Verfahren einen Schritt des Verwendens für mindestens einen Herstellungsparameter einer kollektiven Variation des Parameters um den Sollwert herum innerhalb eines Satzes von hergestellten Elementen (23) aufweist.

2.  Verfahren gemäß Anspruch 1, wobei für mindestens einen Parameter neben der kollektiven Variation eine einzelne Variation des Parameters um den Sollwert herum für ein einzelnes Element (23) verwendet wird.

3.  Verfahren gemäß einem der Ansprüche 1 und 2, wobei der technologische Unsicherheitsfaktor für die lineare Leistungsdichte am heißen Punkt $F_Q^E$ bestimmt wird.

4.  Verfahren gemäß einem der vorhergehenden Ansprüche, wobei der technologische Unsicherheitsfaktor des heißen Kanals $F_{\Delta H}^{E1}$ bestimmt wird.

5.  Verfahren gemäß einem der vorhergehenden Ansprüche, wobei die kollektive Variation mit einem makroskopische-Empfindlichkeit-Koeffizienten, und die einzelne Variation gegebenenfalls mit einem mikroskopische-Sensibilität-Koeffizienten multipliziert werden.

6.  Verfahren gemäß den Ansprüchen 2, 3 und 5 in Kombination, wobei eine Formel des Typs

$$F_Q^E = 1 + \frac{1.645}{1.96} \sqrt{\sum_i \left( \alpha_i^2 \frac{T_i^2}{\mu_i^2} + \theta_i^2 \frac{TL_i^2}{\mu_i^2} \right)}$$

    verwendet wird,
    wobei $T_i$ und $TL_i$ jeweils die einzelne und die kollektive Variation für einen Herstellungsparameter $F_i$ bezeichnen, $\alpha_i$ und $\theta_i$ jeweils den mikroskopische-Sensibilität-Koeffizienten und den makroskopische-Sensibilität-Koeffizienten für den Herstellungsparameter bezeichnen, und $\mu_i$ den Mittelwert für den Herstellungsparameter $F_i$ bezeichnet.

7.  Verfahren gemäß den Ansprüchen 2, 4 und 5 in Kombination, wobei die Formel des Typs

$$F_{\Delta H}^{E1} = 1 + \frac{1.645}{1.96} \sqrt{\sum_i \left( \alpha_i^2 \frac{TL_i^2}{\mu_i^2} + \theta_i^2 \frac{TL_i^2}{\mu_i^2} \right)}$$

    verwendet wird,
    wobei $TL_i$ die kollektive Variation für einen Herstellungsparameter $F_i$ bezeichnet, $\alpha_i$ und $\theta_i$ jeweils den mikroskopische-Sensibilität-Koeffizienten und den makroskopische-Sensibilität-Koeffizienten für den Herstellungsparameter bezeichnen, und $\mu_i$ den Mittelwert für den Herstellungsparameter $F_i$ bezeichnet.

8.  Verfahren gemäß einem der vorhergehenden Ansprüche, wobei die kollektive Variation eine kollektive Toleranz ist, wobei die Abweichung zwischen dem Mittelwert der realen Werte des Herstellungsparameters innerhalb eines Satzes von Elementen (23) und dem Sollwert die kollektive Toleranz einhalten muss, und wobei gegebenenfalls die einzelne Variation eine Einzeltoleranz ist, wobei die Abweichung zwischen dem realen Wert des Herstellungsparameters für ein einzelnes Element (23) und dem Sollwert die Einzeltoleranz einhalten muss.

9.  Konzeptionsverfahren für ein Kernbrennstoffelement (23), wobei das Verfahren einen Schritt des Verwendens eines Ermittlungsverfahrens gemäß einem der vorhergehenden Ansprüche aufweist.

10. Konzeptionsverfahren gemäß Anspruch 9, wobei das Kernbrennstoffelement (23) einen Grenzwert für mindestens einen technologischen Unsicherheitsfaktor einhalten muss, wobei das Verfahren die folgenden Schritte aufweist:

    Definieren einer kollektiven Herstellungstoleranz zumindest für den Herstellungsparameter, wobei die Abweichung zwischen dem Mittelwert der realen Werte des Parameters in einem Satz von hergestellten Elementen (23) und dem Sollwert des Parameters die kollektive Toleranz einhalten muss,
    gegebenenfalls Definieren einer Einzelherstellungstoleranz zumindest für den Herstellungsparameter, wobei die einzelne Abweichung zwischen dem realen Wert des Herstellungsparameters für ein einzelnes Element (23) und dem Sollwert des Parameters für ein hergestelltes Element (23) und dem Sollwert des Parameters die Einzeltoleranz einhalten muss,

Ermitteln des Wertes des technologischen Unsicherheitsfaktors ausgehend von einem Verfahren gemäß einem der Ansprüche 1 bis 6 unter Verwendung der definierten kollektiven Herstellungstoleranz als kollektive Variation und gegebenenfalls der definierten Einzeltoleranz als Einzelvariation, und

Vergleichen des ermittelten Wertes des technologischen Unsicherheitsfaktors mit dem Grenzwert, um die definierten Herstellungstoleranzen zu bestätigen.

**11.** Verfahren zum Herstellen von Kernbrennstoffelementen (23), die mittels eines Verfahrens gemäß einem der Ansprüche 7 oder 8 konzipiert werden.

**12.** Verfahren zum Kontrollieren von hergestellten Kernbrennstoffelementen (23), wobei das Verfahren die folgenden Schritte aufweist:

Verwenden eines Verfahrens gemäß einem der Ansprüche 1 bis 8 zum Ermitteln des Wertes mindestens eines technologischen Unsicherheitsfaktors für die hergestellten Kernbrennstoffelemente (23), wobei als kollektive Variation die Abweichung zwischen einem Mittelwert der in einem Satz der hergestellten Elemente gemessenen realen Werte des Parameters und dem Sollwert des Parameters und gegebenenfalls als Einzelvariation die Abweichung zwischen einem tatsächlich an einem hergestellten Element (23) gemessenen realen Wert und dem Sollwert des Parameters verwendet wird,

Vergleichen mit einem technologischer-Unsicherheitsfaktor-Grenzwert, den die Kernbrennstoffelemente einhalten müssen, um die hergestellten Kernbrennstoffelemente (23) zu beurteilen.

**Claims**

1. A method of determining at least one technological uncertainty factor for nuclear fuel elements as a function of variations in fabrication parameters of the elements about nominal values, **characterized in that** the method comprises a step of using, for at least one fabrication parameter, of collective variation of said parameter about the nominal value within a batch of fabricated elements (23).

2. A method according to claim 1, wherein, for at least one parameter, use is made in addition to said collective variation of individual variation of the parameter about the nominal value for an individual element (23).

3. A method according to claim 1 or 2, wherein the technological uncertainty factor for linear power density at the hot point $F_Q^E$ is determined.

4. A method according to any of the preceding claims, wherein the technological uncertainty factor for the hot channel $F_{\Delta H}^{E1}$ is determined.

5. A method according to any of the preceding claims, wherein the collective variation is multiplied by a macroscopic sensitivity coefficient and optionally the individual variation is multiplied by a microscopic sensitivity coefficient.

6. A method according to claim 2, 3 and 5 taken in combination, wherein use is made of a formula of the type:

$$F_Q^E = 1 + \frac{1.645}{1.96} \sqrt{\sum_i \left( \alpha_i^2 \frac{T_i^2}{\mu_i^2} + \theta_i^2 \frac{TL_i^2}{\mu_i^2} \right)}$$

where $T_i$ and $TL_i$ respectively designate individual and collective variations in a fabrication parameter $F_i$, and $\alpha_i$ and $\theta_i$ respectively designate the microscopic and the macroscopic sensitivity coefficients for the fabrication parameter, and where $\mu_i$ designates the mean for the fabrication parameter $F_i$.

7. A method according to claims 2, 4 and 5 taken in combination, wherein use is made of a formula of the type:

$$F_{\Delta H}^{El} = 1 + \frac{1.645}{1.96} \sqrt{\sum_i \left( \alpha_i^2 \frac{TL_i^2}{\mu_i^2} + \theta_i^2 \frac{TL_i^2}{\mu_i^2} \right)}$$

where $TL_i$ designates the collective variation in a fabrication parameter $F_i$, where $\alpha_i$ and $\theta_i$ designate respectively the microscopic and the macroscopic sensitivity coefficients in the fabrication parameter, and where $\mu_i$ designates the mean for the fabrication parameter $F_i$.

8. A method according to any of the preceding claims, wherein the collective variation is a collective tolerance, the deviation between the mean of the real values for the fabrication parameter within a batch of elements (23) and its nominal value being required to comply with said collective tolerance, and wherein, optionally, the individual variation is an individual tolerance, the deviation between the real value of the fabrication parameter for an individual element (23) and its nominal value needing to comply with the individual tolerance.

9. A method of designing a nuclear fuel element (23), the method including a step of using a method of determining at least one technological uncertainty factor according to any of the preceding claims.

10. A design method according to claim 9, wherein the nuclear fuel element (23) is required to comply with a limit value for at least one technological uncertainty factor, the method comprising the steps of:

   • defining a collective fabrication tolerance at least for said fabrication parameter, the deviation between the mean of the real values of said parameter in a batch of fabricated elements (23) and the nominal value of said parameter being required to comply with the collective tolerance;
   • optionally defining an individual fabrication tolerance at least for said fabrication parameter, the individual deviation between the real value of the fabrication parameter for an individual element (23) and the nominal value of said parameter for a fabricated element (23) and the nominal value for said parameter being required to comply with the individual tolerance; and
   • determining the value of said technological uncertainty factor using a method according to any of claims 1-6, using as collective variation the defined collective fabrication tolerance, and optionally as individual variation the defined individual tolerance; and
   • comparing the determined value of the technological uncertainty factor with the limit value for validating the defined fabrication tolerances.

11. A method of fabricating nuclear fuel elements (23) designed by a method according to claim 7 or 8.

12. A method of inspecting fabricated nuclear fuel elements (23), the method comprising the steps of:

   • using a method according to any of claims 1-8 for determining the value of at least one technological uncertainty factor for the fabricated nuclear fuel elements (23), using as collective variation the deviation between a mean of real values of said parameter as measured in a batch of fabricated elements and the nominal value of said parameter, and optionally as individual variation the deviation between a real value actually measured on a fabricated element (23) and the nominal value of said parameter; and
   • making a comparison with a limiting value for the technological uncertainty factor that the nuclear fuel elements are required to comply with in order to make a decision about the fabricated nuclear fuel elements (23).

**FIG.1**

**FIG.2**

**FIG.3**

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

• **MM. COORS ; WEBER ; SPENKE ; ADAM.** Auswirkungen von Brennstofftoleranzen auf die Betriebsdaten eines Schnellen Reaktors. *JOURNAL OF NUCLEAR MATERIALS NETHERLANDS,* Avril 1982, vol. 106 (1-3), ISSN 0022-31115, 253-259